Europäisches Patentamt

European Patent Office

Office européen des brevets

(11) Numéro de publication: **0 231 701**
**A1**

## (12) DEMANDE DE BREVET EUROPEEN

(21) Numéro de dépôt: **86402888.1**

(22) Date de dépôt: **22.12.86**

(51) Int. Cl.4: **A21D 2/18** , A21D 2/36 , A21D 13/08

(30) Priorité: **23.12.85 FR 8519030**

(43) Date de publication de la demande:
**12.08.87 Bulletin 87/33**

(84) Etats contractants désignés:
**BE DE IT NL**

(71) Demandeur: **NABISCO BRANDS FRANCE S.A.**
**Avenue Ambroise Croizat**
**F-91130 Ris-Orangis(FR)**

(72) Inventeur: **Dallemagne, Roger**
**99 rue de Sèvres**
**F-75006 Paris(FR)**
Inventeur: **Imbaud,Jean**
**6 avenue de la Libération**
**Nogentel F-02400 Chateau Thierry(FR)**

(74) Mandataire: **Orès, Bernard et al**
**Cabinet ORES 6, Avenue de Messine**
**F-75008 Paris(FR)**

(54) **Nouveau produit de pâtisserie et/ou biscuiterie, notamment du type macaron et son procédé de fabrication.**

(57) La présente invention est relative à de nouveaux produits de patisserie et/ou de biscuiterie.

Ces produits sont notamment du type macaron et ils se caractérisent en ce que leurs matières sucrantes comprennent un sucre résistant à la cristallisation qui contient une proportion importante de fructose , dans une proportion telle qu'elle assure la conservation des propriétés organoleptiques satisfaisantes des produits.

Application en patisserie et en biscuiterie.

EP 0 231 701 A1

## NOUVEAU PRODUIT DE PATISSERIE ET/OU BISCUITERIE, NOTAMMENT DU TYPE MACARON ET SON PROCEDE DE FABRICATION

L'invention a pour objet un nouveau produit de pâtisserie et/ou biscuiterie et son procédé de fabrication.

Elle vise, plus particulièrement, un nouveau produit de pâtisserie et/ou biscuiterie du genre des macarons, c'est-à-dire un produit composé exclusivement de matières sucrantes, d'amandes et de blancs d'oeufs, à l'exclusion de matières grasses rajoutées et/ou de matières amylacées ajoutées et cela pour pouvoir bénéficier de l'appellation macaron conformément aux législations en vigueur en France, et en République Fédérale d'Allemagne, par exemple.

Les pâtisseries de ce type sont connues depuis fort longtemps, sous des formes qui diffèrent entre elles par les proportions des constituants, l'aspect, leur goût, -en particulier leur moelleux -, les caractéristiques étant fonction des recettes ou formules mises en oeuvre ainsi que des procédés ou "tours de main" de préparation qui font intervenir, notamment, la durée et/ou la température de cuisson.

Quelle que soit la recette mise en oeuvre, en pâtisserie ou en biscuiterie, les macarons ne conservent que relativement peu longtemps leurs caractéristiques organoleptiques et cela parce qu'ils sont constitués principalement de sucre, d'une part, et qu'ils ont subi une dessiccation relativement importante au cours de leur fabrication, d'autre part. Ainsi, les produits de fabrication domestique ne conservent-ils leurs qualités, notamment de fondant ou de moelleux, que quelques jours seulement, par exemple de trois à six jours après leur fabrication, tandis que pour les produits de fabrication industrielle cette durée peut être de l'ordre de deux mois au plus. Au-delà de ces durées le produit devient dur ou très dur et ainsi difficilement consommable ou totalement inconsommable.

En outre, et en ce qui concerne les produits dont la durée de conservation est la plus grande, on a parfois constaté, au cours du stockage, l'apparition de moisissures qui, bien entendu, rendent le produit totalement impropre à la consommation.

On a déjà proposé de remédier à ce dernier inconvénient, c'est-à-dire l'apparition de moisissures, en acidifiant le mélange mis en oeuvre à l'aide d'une solution d'acide tartrique (M. BARAT, Revue des Fabricants de Confiserie, Chocolaterie, Confiturerie, Biscuiterie, 1978, N ° 11, p.24-27). Cependant, si cette adjonction permet de retarder l'apparition des moisissures pour des durées de conservation relativement courtes elle ne permet pas d'augmenter cette durée de conservation, d'une part, n'apporte pas de solution à la conservation du fondant ou moelleux des macarons, d'autre part et, enfin, non seulement ne permet plus au produit de bénéficier de l'appellation légale de macaron mais encore peut faire obstacle à sa commercialisation auprès d'acheteurs sensibles à l'adjonction d'agents anti-moisissures.

Pour tenter d'accroître la durée de conservation du moelleux d'un macaron on a déjà proposé, dans l'article intitulé "Macaroon pastes variations on a theme" (Review for Chocolate, Confectionery and Bakery - CCB, 1978, N° 1, p.42-46) ou dans DE-A-2 603 925, pour un macaron de noix de coco, d'augmenter la proportion habituellement mise en oeuvre de sirop de glucose. Dans ces documents, toutefois, qui ne traitent pas de produits répondant à la définition légale des macarons (dans la mesure où ils comprennent des ingrédients autres que ceux limitativement prévus par les textes réglementaires) on n'évoque pas la protection des produits à l'encontre du développement de moisissures et, en outre, il n'apparaît pas d'indication chiffrée quant à la prolongation de la durée de vie des produits considérés avec conservation de leurs qualités organoleptiques, bien entendu.

Complémentairement, l'adjonction de sirop de glucose sous forme liquide en quantités relativement importantes provoque inévitablement un ramollissement de la pâte qui conduit à un étalement important du produit à la cuisson, avec pour conséquence un aspect non satisfaisant du produit fini dont la cuisson est mal équilibrée, notamment en raison du déssèchement lié audit étalement.

L'utilisation de sirop de sucre inverti et de sirop de maïs a été proposé dans le cadre d'un article de présentations de formules de macarons dans l'article intitulé Cereals, Baked goods, Dairy and Egg Products (Foods Products Formulary, 2, 1975, p.92-95, The Avi Publishing Company Inc. US). Toutefois, dans cette publication, qui n'envisage pas d'application industrielle, la conservation des produits n'est pas étudiée.

C'est d'une façon générale, un but de l'invention de fournir un produit de biscuiterie, et ainsi susceptible d'être fabriqué industriellement, qui réponde aux normes législatives ou réglementaires quant à l'appellation "macaron" et qui, en outre, non seulement conserve ses propriétés de moelleux ou de fondant pendant une durée importante, de l'ordre de six mois ou davantage après fabrication mais qui, pendant cette même durée, ne fasse l'objet d'aucun développement de moisissures.

C'est, aussi un but de l'invention de fournir de tels produits dont le coût soit comparable à celui des produits existants actuellement mais dont la durée de conservation est notablement inférieure à la leur.

C'est, enfin, un but de l'invention de fournir un procédé de fabrication d'un tel produit qui non seulement soit de faisabilité industrielle mais qui, en outre, assure l'obtention de produits satisfaisants au point de vue de leurs qualités de présentation, de goût, de texture, de moelleux, etc ...

Un produit de pâtisserie et/ou de biscuiterie selon l'invention, notamment un produit du type macaron, c'est-à-dire constitué de matières sucrantes, de blancs d'oeufs et d'amandes ou fruits analogues dans lequel le sucre et/ou lesdites matières sucrantes contiennent une proportion importante de fructose caractérisé en ce que le sucre et/ou lesdites matières sucrantes sont présents dans une proportion telle qu'elle assure la conservation des propriétés organoleptiques satisfaisantes du produit, notamment du moelleux, pendant une durée au moins égale à six mois à compter de la date de fabrication et cela en conférant au produit une humidité résiduelle supérieure ou égale à 5%, de préférence de l'ordre de 9%, et une activité d'eau inférieure à 0,7, de préférence de l'ordre de 0,55 à 0,60.

On entend ici, par "sucre ou matière sucrante résistant à la cristallisation", un sucre ou mélange de sucres ou de matières sucrantes qui cristallise(nt) beaucoup plus lentement que le sucrose dans les conditions qui sont celles que l'on rencontre, eu égard à l'humidité résiduelle et à l'activité d'eau, dans les pâtisseries ou gâteaux usuels, les durées au cours desquelles de tels sucres ou matières sucrantes demeurent dans un état de cristallisation moins important que celui existant dans les mêmes conditions avec du saccharose seul pouvant être de l'ordre de six mois ou davantage.

En ce qui concerne le terme "activité d'eau $(a_w)$" celui-ci est utilisé ici au sens habituel de rapport de la fugacité de l'eau $\underline{f}$ dans un état donné à la fugacité $f_o$ de l'eau à un état standard (voir, par exemple,"Techniques de l'Ingénieur", Généralités T. 3, Fasc. A2072).

Les travaux et recherches entrepris par la Demanderesse ont maintenant montré, de façon surprenante, qu'un sirop à haute teneur en fructose, de caractéristiques bien déterminées et mis en oeuvre suivant des modalités bien définies, en particulier suivant des quantités pondérales suffisamment faibles,permettait l'obtention du résultat recherché, c'est-à-dire un ralentissement de la cristallisation du saccharose pendant une durée au moins égale à six mois à compter de la date de fabrication du produit, une rétention d'humidité suffisante pour l'obtention d'un pourcentage d'humidité résiduelle supérieur ou égal à 5%, de préférence de l'ordre de 9% et, simultanément une activité d'eau inférieure à 0,7, de préférence de l'ordre de 0,55 à 0,60, laquelle s'oppose ainsi efficacement au développement des moisissures.

Dans une réalisation particulièrement avantageuse, le sirop à haute teneur en fructose mis en oeuvre est un sirop du type de ceux vendus par la Société ROQUETTE sous la dénomination MELIOSE 700 et dont les caractéristiques sont les suivantes :

extrait sec : 70 %

pourcentage de fructose : 43 %

pourcentage de glucose : 51 %

pourcentage de polysaccharides : 6 %

activité d'eau $(a_w)$ à 20°C : 0,85-0,9

Pour sa mise en oeuvre le sirop est présent suivant une quantité telle que son extrait sec, rapporté au produit fini, est de l'ordre de 11 % dudit produit fini.

Les produits de pâtisserie et/ou biscuiterie selon l'invention, en particulier les produits du type macarons, ont alors une composition en matières sucrantes sensiblement comme suit :

saccharose ≤ à 80 %

fructose ≥ à 8 %

glucose ≥ à 10 %

L'invention n'est pas limitée aux macarons à base d'amandes, mais trouve également une application avantageuse aux produits dans lesquels les amandes sont remplacées par d'autres fruits secs du type de ceux autorisés par les législations en vigueur pour pouvoir bénéficier de l'appellation "macarons" et qui sont, par exemple, des produits comme les noisettes, les noix, les noix de coco, etc...

L'invention a également pour objet un procédé pour la fabrication de produits de pâtisserie et/ou de biscuiterie du type macaron, c'est-à-dire constitués de matières sucrantes, de blancs d'oeufs, et d'amandes ou produits analogues, dans lequel on incorpore à la formule de base du produit du sucre ou des matières sucrantes résistant à la cristallisation, avantageusement du fructose sous forme de sirop à haute teneur en fructose (High Fructose Corn Syrup), caractérisé en ce que le fructose est dans une proportion telle que le produit conserve ses qualités de moelleux pendant une durée au moins égale à six mois à compter de sa date de fabrication, avec une humidité résiduelle supérieure ou égale à 5%, de préférence de l'ordre de 9% et une activité d'eau inférieure à 0,7 de préférence de l'ordre de 0,55 à 0,60.

Dans un mode de réalisation avantageux, l'opération de broyage, dite encore de fabrication de la pâte mère, est conduite de manière grossière, contrairement à la pratique usuelle qui cherche à obtenir une pâte de finesse aussi grande que possible.

De façon spécifique, le broyage est conduit de manière telle que la granulométrie du mélange soit de l'ordre de celle indiquée ci-dessus :

Tamis 3,15 mm 0,000

Tamis 2,000 mm environ 14,000 à 10,5

Tamis 0,850 mm environ 68,000

Tamis 0,600 mm environ 7,000 à 8,2

Tamis 0,250 mm environ 10,000 à 12

Tamis 0,150 mm environ 0,200 à 0,8

Tamis 0,080 mm environ 0,000 à 0,4

Tamis 0,045 mm 0,000

Une pâte mère élaborée selon le procédé de l'invention contient alors en son intérieur des fragments d'amandes non broyées, lesquels se retrouvent dans le produit final dont ils améliorent les qualités organoleptiques.

Dans un mode de réalisation préféré, l'invention prévoit d'ajouter une meringue, au cours du pétrissage, de préférence une meringue italienne, c'est-à-dire des blancs d'oeufs montés avec du sucre cuit, laquelle favorise considérablement la tenue de la pâte mère au moment du dressage et de la cuisson, en limitant l'étalement des produits, avec pour corollaire un maintien de l'humidité dans les proportions souhaitées.

L'invention sera mieux comprise par la description qui suit d'exemples de réalisation donnés à titre d'illustration des produits et du procédé selon l'invention.

La fabrication de macarons fait appel, de façon en soi connue, à des matières premières constituées exclusivement de :

-matières sucrantes,

-blancs d'oeufs, et

-amandes ou produits analogues.

Les matières sucrantes sont généralement formées par du sucre cristal, d'une granulométrie appropriée, par exemple du sucre de betteraves ayant une teneur en saccharose d'au moins 99,7 %, une teneur en sucres réducteurs d'au plus 0,04 % et une granulométrie moyenne de 0,75 mm, répartie comme suit :

refus 1 mm : 7 à 14 %

entre 1 mm et 0,8 mm :16 à 23 %

entre 0,8 et 0,5 mm :48 à 58 %

ledit sucre contenant une petite quantité de sucre glace, favorable au "ressuyage" de la pâte ;

les blancs d'oeufs sont soigneusement clarifiés (séparation des jaunes et des blancs) et cela pour éviter toute trace de jaune dont la présence est préjudiciable à l'obtention de produits de bonne qualité ;

les amandes ou produits analogues sont mondés ou non mondés.

Le choix de la variété et de la provenance détermine, dans une certaine mesure, les qualités organoleptiques du produit fini et une faible proportion d'amandes amères (ou d'huile essentielle d'amandes amères) peut être utilisée pour rehausser le goût, dans le cas de l'utilisation d'amandes proprement dites.

En variante, les amandes proprement dites sont remplacées par des noisettes, ou des noix, ou des noix de coco, etc...

A partir des ingrédients ci-dessus, auxquels l'invention prévoit d'ajouter du sirop à haute teneur en fructose, on effectue d'abord un broyage, généralement désigné sous le nom de préparation d'une pâte mère, puis l'on procède à la préparation de la pâte proprement dite laquelle est ensuite dressée puis soumise à l'opération de cuisson.

A/Préparation d'une pâte mère par broyage.

Cette opération, d'une importance capitale pour la réussite du produit, s'effectue sur un broyeur à cylindres de granit.

Les produits à broyer, à savoir les fruits et le sucre sont mélangés en quantités égales dans une bassine et le broyage est d'abord entrepris avec les cylindres légèrement serrés pour éviter de broyer trop rapidement les fruits ce qui conduirait à une exudation de matière grasse provoquant par la suite un étalement excessif du produit à la cuisson et, partant, un résultat non satisfaisant.

Pour donner une certaine cohésion à la pâte, des blancs d'oeufs sont ajoutés au cours du broyage, dans une proportion de 15 à 25 parties en poids de blancs d'oeufs pour 100 parties de sucre et 100 parties de fruits.

Le broyage qui est conduit de manière à obtenir une pâte qui ne soit ni trop dure, ni trop molle, prévoit de faire passer plusieurs fois le mélange au travers des cylindres dont l'écartement est progressivement diminué.

Conformément à l'invention, l'opération de broyage est interrompue plus tôt que dans les opérations de fabrication usuelle, et cela afin de préserver à l'intérieur de la pâte des fragments de fruits non broyés.

De façon plus précise, le broyage est conduit, selon l'invention, de manière à obtenir une granulométrie sensiblement comme suit :

Tamis 3,15 mm 0,000
Tamis 2,000 mm environ 14,000 à 10,5
Tamis 0,850 mm environ 68,000
Tamis 0,600 mm environ 7,000 à 8,2
Tamis 0,250 mm environ 10,000 à 12
Tamis 0,150 mm environ 0,200 à 0,8
Tamis 0,080 mm environ 0,000 à 0,4
Tamis 0,045 mm 0,000

Lorsque cette condition est atteinte, on laisse reposer la pâte mère pendant au moins 24 heures, en la recouvrant pour éviter le croûtage.

Ce repos permet une absorption des liquides, favorable à l'obtention de bonnes caractéristiques dimensionnelles du produit fini.


### B/Préparation de la pâte proprement dite.

Après que la pâte mère ait été laissée reposer, on confectionne la pâte proprement dite en mélangeant dans un pétrin à vitesse de malaxage relativement lente, par exemple de l'ordre de 40 tours/minute, la pâte mère, le sirop à haute teneur en fructose, une nouvelle quantité de blancs d'oeufs, et éventuellement une petite quantité d'essence d'amandes amères (dans le cas de macarons d'amandes).

Pour assurer le maintien de la consistance de la pâte on ajoute à cette dernière, lors du pétrissage, une meringue italienne, c'est-à-dire des blancs d'oeufs montés avec du sucre cuit. On améliore ainsi la tenue de la pâte au moment du dressage et de la cuisson, ce qui limite l'étalement avec pour conséquence une meilleure conservation de l'humidité.


### C/Dressage

Celui-ci est effectué soit sur du papier de cuisson, soit sur un support métallique préalablement graissé et fariné pour limiter l'étalement des pâtons tout en facilitant le décollage des produits terminés.

L'opération de dressage peut être manuelle, à l'aide d'une poche et d'une douille, ou être conduite mécaniquement à l'aide d'un matériel d'emmoulage approprié au type de pâte à consistance molle mise en oeuvre.

On effectue ensuite, le cas échéant, une opération de mouillage par un linge humide à la surface des pâtons crus pour abaisser les pointes résultant du dressage et favoriser la formation d'un micro-fendillement de la croûte, qui est un des traits caractéristiques des macarons.


### D/ Cuisson

Celle-ci est conduite à température relativement douce, de l'ordre de 150 à 175°C, et pendant une durée de l'ordre de 10 minutes, celle-ci étant fonction de la grosseur des pâtons.

Après cuisson, les produits finis sont décollés en sortant du four, le papier de cuisson pouvant être soit retiré, soit maintenu accolé au produit pour le stockage de ce dernier, lorsqu'un tel papier est utilisé.

Les macarons obtenus par mise en oeuvre de ce procédé et dont l'aspect, la texture, le moelleux, etc... sont semblables à ceux des macarons usuels, conservent des propriétés de moelleux, de fondant et, d'une manière générale, des propriétés organoleptiques nettement améliorées par rapport à celles des produits usuels contenant uniquement du saccharose et cela pendant une longue ou très longue durée de stockage, de l'ordre de six mois et davantage à compter de la date de leur fabrication.

Exemple I -Macarons d'amandes

On prépare tout d'abord par broyage d'amandes, de matières sucrantes et de blancs d'oeufs une pâte mère ayant la composition suivante, en parties en poids :
-amandes mondées (amandes d'Espagne) : 15
-sucre cristal : 15
-blancs d'oeufs : 2,25
On prépare ensuite la formule suivante, également en partie en poids :
-pâte mère : 32,25
-sirop à haute teneur en fructose (High Fructose Corn Syrup) : 6,45
-blancs d'oeufs : 1,61
-essence d'amandes amères : 0,004
-meringue italienne : 5,65
(à savoir blancs d'oeufs: 1,55)
sucre cuit : 4,1)

Le sirop à haute teneur en fructose (High Fructose Corn Syrup) est un sirop du type de celui vendu par la Société ROQUETTE sous la dénomination commerciale MELIOSE 700 et dont les caractéristiques sont les suivantes :
-extrait sec : 70 %
- pourcent de fructose : 43 %
-pourcent de glucose : 51 %
-pourcent de polysaccharides : 6 %
-activité d'eau ($a_w$) à 20°C : 0,85-0,90

Pour un rendement théorique (biscuits à 9,5 % d'humidité résiduelle) égal à 41,67, l'extrait sec total en matière sucrante est de : $15 + 6,45 \times 0,7 + 4,1 = 23,615$.

L'extrait sec en matières sucrantes sur produit fini est alors de :

$$\frac{23,615 \times 100}{41,67} = 56,7 \%$$

La quantité de saccharose en pourcentage de matières sucrantes est de:

$$\frac{19,1 \times 100}{23,615} == 80,9 \%$$

La quantité de sucres réducteurs en pourcentage des matières sucrantes est alors de : 19,1 %, dont un pourcentage de fructose de : 8,7%
et un pourcentage de glucose de : 10,4%

Les macarons obtenus ont un pourcentage d'humidité résiduelle de 9,5 %, une activité d'eau $a_w$ de : 0,55-0,60 et un extrait sec de sirop à haute teneur en fructose rapporté au produit fini égale à 11 % du produit fini.

Les macarons ainsi obtenus, ayant un diamètre de 50 mm et un poids unitaire d'environ 13 g ont été emballés dans des sachets en une feuille d'un complexe polyester métallisé et de polyéthylène, c'est-à-dire en un matériau formant une barrière étanche et efficace à l'encontre des échanges d'eau et d'oxygène avec le milieu ambiant.

Les macarons ainsi préparés et emballés sont alors soumis à un processus de conservation accélérée consistant à maintenir les produits dans une enceinte à la température de 6°C au cours de la nuit et à la température ambiante au cours du jour.

Des essais sont conduits sur des sachets de cinq biscuits chacun et les résultats d'essai sont exprimés en valeur moyenne.

Un examen des macarons quatre semaines après leur date de fabrication permet de mesurer une humidité moyenne de 8,1 % et une activité d'eau $a_w$, d'environ 0,64.

Les macarons présentent une légère croûte entourant un milieu fondant, moelleux et élastique en bouche.

Des essais comparatifs entre des macarons usuels et des macarons selon l'invention soumis les uns et les autres au processus de conservation accélérée, tel que défini ci-dessus, ont été conduits 1, 2, 3 et 4 semaines après fabrication et les résultats sont résumés dans le Tableau I ci-après :

### TABLEAU I

|  | 1ère semaine | 2ème semaine | 3ème semaine | 4ème semaine |
|---|---|---|---|---|
| Macarons usuels | croûte un peu dure, centre mou, fondant | croûte dure milieu fondant | croûte dure milieu moelleux, non élastique | croûte dure se détache du milieu moelleux non élastique |
| Produits selon l'Exemple I | mou, élastique en bouche | mou, élastique en bouche | légère croûte, milieu élastique en bouche | légère croûte milieu fondant élastique en bouche |

Les résultats d'analyse sensorielle rapportés dans le Tableau I sont complétés par des mesures d'humidité (exprimée en % selon la méthode A.O.A.C.), d'activité d'eau (Capteur Novashina), et d'analyse de texture à l'aide de l'appareil Brabender lequel permet d'évaluer une résistance à la flexion de la croûte des produits analysés d'une part et, d'autre part l'élasticité du produit, les résultats étant rassemblés dans les Tableaux II à V ci-après :

## TABLEAU II - Humidité en %

|  | 1ère semaine | 2ème semaine | 3ème semaine | 4ème semaine |
|---|---|---|---|---|
| Macarons usuels | 11 | 10,5 | 11 | 10,5 |
| Macarons selon l'Exemple I | 8 | 7,8 | 8,3 | 8,3 |

## TABLEAU III - Activité d'eau

|  | 1ère semaine | 2ème semaine | 3ème semaine | 4ème semaine |
|---|---|---|---|---|
| Macarons usuels | 0,79 | 0,80 | 0,77 | 0,78 |
| Macarons selon l'Exemple I | 0,6 | 0,65 | 0,62 | 0,63 |

## TABLEAU IV - Résistance à la flexion en $P/cm^2$

|  | 1ère semaine | 2ème semaine | 3ème semaine | 4ème semaine |
|---|---|---|---|---|
| Macarons usuels | 225 | 310 | 350 | 315 |
| Macarons selon l'Exemple I | 120 | 160 | 250 | 250 |

## TABLEAU V - Elasticité en centimètre

|  | 1ère semaine | 2ème semaine | 3ème semaine | 4ème semaine |
|---|---|---|---|---|
| Macarons usuels | 1,85 | 1,35 | 0,65 | 1 |
| Macarons selon l'Exemple I | 6,50 | 6,20 | 4,75 | 3,75 |

Exemple II -Macarons de noix-

On prépare d'abord par broyage de noix, de sucre cristal et de blancs d'oeufs une pâte mère ayant la composition suivante, en parties en poids :
cerneaux invalides de noix 5,0
sucre cristal 5,0
blancs d'oeufs 0,8
On prépare ensuite une pâte de macarons ayant la composition suivante, également en partie en poids :
pâte mère 10,8
sirop "Méliose 700" 2,160

blancs d'oeufs 1,440
meringue italienne 1,890
(à savoir blancs d'oeufs: 0,519)
sucre cuit : 1,371)

Après cuisson dans les conditions indiquées ci-dessus, on obtient des macarons présentant un pourcentage d'humidité de 9,9 % et une activité d'eau de 0,68.


Exemple III -Macarons de noix de coco

On prépare d'abord une pâte mère ayant la composition suivante, en parties en poids :
noix de coco râpée, séchée 5,00
sucre cristal 5,00
blancs d'oeufs 1,4

A partir de cette pâte mère est préparée une pâte de macarons ayant la formule suivante, en parties en poids :
pâte mère 11,40
sirop de "Méliose 700" 2,28
blancs d'oeufs 2,28
meringue italienne 1,995
(à savoir blancs d'oeufs: 0,547)
sucre cuit : 1,448)

Un traitement analogue à celui exposé ci-dessus fournit des macarons ayant un pourcentage d'humidité résiduelle de 9,96 % et une activité d'eau de 0,59.


Exemple IV -Macarons de noisettes

On prépare une pâte mère à partir de noisettes broyées, de sucre et de blancs d'oeufs, dont la composition en poids est la suivante :
noisettes fraîches, variété romaine non mondées 5,0
sucre cristal 5,0
blancs d'oeufs 1,1

A partir de cette pâte mère on confectionne une pâte ayant la composition suivante, en parties en poids :
pâte mère 11,1
sirop de "Méliose 700" 2,22
blancs d'oeufs 0,832
meringue italienne 1,942
(à savoir blanc d'oeufs: 0,533)
sucre cuit : 1,409)

L'extrait sec total en matières sucrantes sur produit fini est de : 56,8 %.

La quantité de saccharose en % de matières sucrantes est de 80,5 % et les sucres réducteurs représentent 19,5 % des matières sucrantes.

Les produits obtenus, par un traitement comme indiqué dans l'Exemple I, ont une humidité résiduelle de 10,1 % et une activité d'eau de 0,70.


**Revendications**

1. Produit de pâtisserie et/ou de biscuiterie, notamment du type macaron constitué de matières sucrantes, de blancs d'oeufs et d'amandes ou fruits analogues, dans lequel le sucre et/ou lesdites matières sucrantes contiennent une proportion importante de fructose, caractérisé en ce que le sucre et/ou lesdites matières sucrantes sont présents dans une proportion telle qu'elle assure la conservation des propriétés organoleptiques satisfaisantes du produit, notamment du moelleux, pendant une durée au moins égale à six mois à compter de la date de fabrication et cela en conférant au produit une humidité résiduelle supérieure ou égale à 5%, de préférence de l'ordre de 9% et une activité d'eau inférieure à 0,7, de préférence de l'ordre de 0,55 à 0,60.

2. Produit selon la revendication 1, caractérisé en ce que le sucre et/ou les matières sucrantes sont sous forme d'un sirop ayant les caractéristiques suivantes :

-extrait sec : 70%

-pourcentage de fructose : 43%

-pourcentage de glucose : 51%

-pourcentage de polysaccharides : 6%

-activité d'eau ($a_w$) : 0,85-0,9

3. Produit selon la revendication 2, caractérisé en ce que le sirop est présent suivant une quantité telle que son extrait sec, rapporté au produit fini, est de l'ordre de 11% dudit produit fini, la teneur en saccharose, en pourcentage de matières sucrantes étant de l'ordre de 80%.

4. Produit selon l'une quelconque des revendications précédentes, caractérisé en ce que l'extrait sec total matières sucrantes/produit fini est de l'ordre de 55%.

5. Produit selon l'une quelconque des revendications précédentes, caractérisé en ce que les fruits sont des amandes qui représentent environ 45% en poids de la pâte mère et environ 35% en poids du produit fini.

6. Produit selon l'une quelconque des revendica tions 1 à 4, caractérisé en ce que les fruits sont des noix qui représentent environ 45% en poids de la pâte mère et environ 35% en poids du produit fini.

7. Produit selon l'une quelconque des revendications 1 à 4, caractérisé en ce que les fruits sont des noix de coco qui représentent environ 45% en poids de la pâte mère et environ 35% en poids du produit fini.

8. Produit selon l'une quelconque des revendications 1 à 4, caractérisé en ce que les fruits sont des noisettes qui représentent environ 45% en poids de la pâte mère et environ 35% en poids du produit fini.

9. Procédé de fabrication de produits de pâtisserie ou de biscuiterie, du type macaron, constitués de matières sucrantes, de blancs d'oeufs, d'amandes ou de fruits analogues dans lequel on incorpore à la formule de base du produit du sucre ou des matières sucrantes résistant à la cristallisation, avantageusement du fructose sous forme de sirop à haute teneur en fructose, caractérisé en ce que le fructose est dans une proportion telle que le produit conserve ses qualités de moelleux pendant une durée au moins égale à six mois à compter de sa date de fabrication, avec une humidité résiduelle supérieure ou égale à 5% et de préférence de l'ordre de 9% et une activité d'eau inférieure à 0,7 et de préférence de l'ordre de 0,55 à 0,60.

10. Procédé selon la revendication 9, caractérisé en ce que le sirop à haute teneur en fructose est un sirop ayant les caractéristiques suivantes :

-extrait sec : 70%

- pourcentage de fructose : 43%

-pourcentage de glucose : 51%

-pourcentage de polysaccharides : 6%

ajouté suivant une quantité correspondant à environ 11% en extrait sec rapporté au produit fini.

11. Procédé selon la revendication 9, caractérisé en ce que le broyage des fruits pour la fabrication d'une pâ te mère est conduit d'une manière grossière, avantageusement pour l'obtention d'une granulométrie sensiblement comme suit :

-tamis 3,15 mm 0,000

-tamis 2,000 mm environ 14,000 à 10,5

-tamis 0,850 mm environ 68,000

-tamis 0,600 mm environ 7,000 à 8,2

-tamis 0,250 mm environ 10,000 à 12

-tamis 0,150 mm environ 0,200 à 0,8

-tamis 0,080 mm environ 0,000 à 0,4

-tamis 0,045 mm 0,000

12. Procédé selon l'une quelconque des revendications 9 à 11, caractérisé en ce que l'on prépare la pâte mère par broyage d'une quantité égale de fruits et de sucre, à vitesse relativement lente avec addition, au cours du broyage de blancs d'oeufs dans une proportion comprise entre 15 à 25 parties en poids pour 100 parties de sucre et 100 parties de fruits.

13. Procédé selon l'une quelconque des revendications 9 à 12, caractérisé en ce que après avoir laissé reposer la pâte mère, celle-ci est mélangée dans un pétrin à vitesse de malaxage relativement lente aux autres ingrédients constitutifs du produit, comme du sirop à haute teneur en fructose, des blancs d'oeufs et une meringue, -avantageusement une meringue italienne -, pour l'obtention d'une pâte divisée en pâtons lesquels sont ensuite soumis à une opération de cuisson conduite à une température de l'ordre de 165 à 175°C pendant une durée de l'ordre de 10 minutes.

14. Produit de pâtisserie et/ou de biscuiterie obtenu par mise en oeuvre du procédé selon l'une quelconque des revendications 9 à 13.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | D.K. TRESSLER et al.: "Food Products Formulary", vol. 2, Cereals, Baked Goods, Dairy and Egg Products, 1975, pages 92-95, The AVI Publishing Company, Inc., Westport, Connecticut, US<br>* Page 92, colonne 1, deuxième recette: "Macaroons"; page 93, colonne 2, deuxième recette: "Macaroons, real good coconut" * | 1-4,6, 9-11, 14 | A 21 D 2/18<br>A 21 D 2/36<br>A 21 D 13/08 |
| X | FR-A-2 178 970 (THE PILLSBURY CIE.)<br>* Revendications 1,15,16,27; page 20, ligne 35 - page 21, ligne 2; page 14, lignes 11-20; page 41, ligne 31 - page 42, ligne 4; page 44, lignes 5-6 * | 1,6 | |
| A | W.H. SMITH: "Biscuits, crackers and cookies", vol. 2, 1972, pages 221-222, Applied Science, GB<br>* Page 221, recette 147; page 222, recettes 148,149 * | 1 | DOMAINES TECHNIQUES RECHERCHES (Int. Cl.4)<br><br>A 21 D |
| A | GB-A- 462 986 (J. SAGI) | | |
| A | US-A-3 057 736 (J.H. FORKNER) | | |

--- -/-

Le présent rapport de recherche a été établi pour toutes les revendications

| Lieu de la recherche | Date d'achevement de la recherche | Examinateur |
|---|---|---|
| LA HAYE | 09-03-1987 | COUCKE A.O.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82

## DOCUMENTS CONSIDERES COMME PERTINENTS

Page 2

| Catégorie | Citation du document avec indication, en cas de besoin, des parties pertinentes | Revendication concernée | CLASSEMENT DE LA DEMANDE (Int. Cl. 4) |
|---|---|---|---|
| A | FR-A-2 031 918 (J. BALLERINI) --- | | |
| A | THE BAKERS DIGEST, vol. 47, no. 5, octobre 1973, pages 80-82; E.J. KEAL: "Sweeteners for baked foods" * Page 82, tableau II * ----- | 1-2 | |
| | | | DOMAINES TECHNIQUES RECHERCHES (Int. Cl.4) |

Le présent rapport de recherche a été établi pour toutes les revendications

| Lieu de la recherche | Date d'achèvement de la recherche | Examinateur |
|---|---|---|
| LA HAYE | 09-03-1987 | COUCKE A.O.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82